# EUROPÄISCHE PATENTANMELDUNG

(11) **EP 3 453 522 A1**
(43) Veröffentlichungstag der Anmeldung: **13.03.2019**
(21) Anmeldenummer: 17189955.2
(22) Anmeldetag: 07.09.2017
(51) Int. Cl.: B29C 65/10, B29C 65/50, F16B 11/00, B29K 101/12, B29K 101/10, B29K 105/06, B29K 705/00, B29K 705/02, B29K 705/12

(54) **VORRICHTUNG ZUM HEISSGASSCHWEISSEN SOWIE EIN VERFAHREN ZUM HERSTELLEN EINES HYBRIDBAUTEILS UND DIE VERWENDUNG EINER AUFTRAGSEINHEIT**

(71) Anmelder: Nolax AG, 6203 Sempach Station (CH)
(72) Erfinder: Vogler, Christian, 91278 Pottenstein (DE); Koch, David, 3007 Bern (CH); Frey, Thomas, 6204 Sempach (CH); Traber, Bruno, 3110 Münsingen (CH)
(74) Vertreter: Hepp Wenger Ryffel AG

(57) **Zusammenfassung**

Die Erfindung betrifft eine Vorrichtung (1) zum Heissgas-Schweissen. Die Vorrichtung (1) umfasst: mindestens eine erste Halterung (2) zum Halten eines ersten Bauteils (3); optional: eine zweite Halterung (4) zum Halten eines zweiten Bauteils (5), wobei die zweite Halterung (4) parallel zur ersten (2) anordenbar ist; eine Auftragseinheit (6), wobei die Auftragseinheit (6) über der ersten Halterung (2) und optional zwischen der ersten (2) und der zweiten Halterung (4) anordenbar ist und mindestens eine Heissgasdüse (7) umfasst. Mindestens ein Fixierelement (8a, 8b) ist an der Auftragseinheit (6) angeordnet. Die Erfindung betrifft auch ein Verfahren zum Herstellen eines Hybridbauteils (10) sowie die Verwendung einer Auftragseinheit (6).

## Beschreibung

Die Erfindung betrifft eine Vorrichtung zum Heissgas-Schweissen, ein Verfahren zum Herstellen eines Hybridbauteils sowie die Verwendung einer Auftragseinheit gemäss den Oberbegriffen der unabhängigen Ansprüche.

Das Heissgas-Schweissen ist ein Verfahren, das typischerweise zum Verbinden von Kunststoffteilen verwendet wird. Bei artungleichen Kunststoffen kommt normalerweise eine Schweisshilfe in Form einer Folie zur Anwendung, die als Klebstoff zwischen den Kunststoffen fungiert.

In der Literatur ist nur wenig bekannt über das Herstellen von Hybridbauteilen mittels Heissgas-Schweissen. Insbesondere das Herstellen von komplexen Hybridbauteilen aus beispielsweise Metall und Kunststoff stellt dabei eine Herausforderung dar. Zum einen muss eine Möglichkeit gefunden werden, eine gute Haftung zwischen den unterschiedlichen Materialien zu ermöglichen und zum anderen müssen diese unterschiedlichen Materialien unter verschieden Bedingungen bearbeitet werden. Bei der Herstellung von Hybridbauteilen mittels Heissgas-Schweissen müssen insbesondere die unterschiedlichen Prozesstemperaturen zur Bearbeitung der Materialien Berücksichtigung finden. Bei komplexen dreidimensionalen Strukturen besteht zudem die Schwierigkeit, die Schweisshilfe gleichmässig auf alle Bereiche des Bauteils zu applizieren. So besteht die Gefahr, dass die Schweisshilfe an einer vertikalen Fläche nicht genügend haften bleibt. An solchen Stellen kann es daher zu einer ungenügenden Verbundfestigkeit kommen, was zu einer Materialschwäche im Bauteil führen kann.

Ein weiterer Nachteil herkömmlicher Heissgas-Schweiss-Anlagen ist eine ungleichmässige Hitze- bzw. Wärmeverteilung, was zu unsauberen Schweissnähten führen kann. Auch dies kann zu einer ungenügenden stoff-und kraftschlüssigen Verbindung zwischen den unterschiedlichen Materialien führen.

Es ist daher eine Aufgabe der Erfindung die Nachteile des Stands der Technik zu überwinden.

Es ist insbesondere eine Aufgabe der Erfindung eine Vorrichtung zum Heissgas-Schweissen bereitzustellen, die eine präzise und sichere Auftragung einer Schweisshilfe und eine gleichmässige Hitze- und Wärmeverteilung ermöglicht und somit die Herstellung qualitativ hochwertiger komplexer dreidimensionaler Hybridbauteile erlaubt. Es ist eine weitere Aufgabe der Erfindung ein Verfahren zum Herstellen eines Hybridbauteils sowie die Verwendung einer Auftragseinheit zum Schweissen von Folien bereitzustellen.

Diese Aufgaben werden durch die in den unabhängigen Patentansprüchen definierten Vorrichtungen und Verfahren gelöst. Weitere Ausführungsformen ergeben sich aus den abhängigen Patentansprüchen.

Die Erfindung betrifft eine Vorrichtung zum Heissgas-Schweissen. Die Vorrichtung umfasst mindestens eine erste Halterung zum Halten eines ersten Bauteils. Eine zweite Halterung kann optional zum Halten eines zweiten Bauteils vorgesehen sein. Die zweite Halterung ist parallel zur ersten Halterung anordenbar. Die Vorrichtung umfasst auch eine Auftragseinheit. Die Auftragseinheit ist über der ersten Halterung und optional zwischen der ersten und der zweiten Halterung anordenbar. Die Auftragseinheit umfasst mindestens eine Heissgasdüse. Des Weiteren ist mindestens ein Fixierelement an der Auftragseinheit angeordnet.

Vorzugsweise weist die Auftragseinheit mehrere Heissgasdüsen auf. Die Heissgasdüsen können an einer Düsenplatte oder an einem Rahmen der Auftragseinheit angeordnet sein. Alternativ können die Düsen auch integraler Bestandteil einer Düsenplatte sein. Beispielsweise können in der Düsenplatte Kanäle zum Durchführen des Heissgases angeordnet sein und die äusseren Extremitäten von diesen im Inneren des Blocks geführten Kanälen bilden die Düsen. Die Heissgasdüsen können in gleichem Abstand zueinander angeordnet sein oder unterschiedliche Abstände zueinander aufweisen. Unterschiedliche Abstände können beispielsweise sinnvoll sein, wenn man unterschiedliche Wärmekapazitäten von Materialien ausnutzen bzw. gewollt "Hotspots" schaffen möchte. Die Düsen sind beispielsweise aus einem Metall oder einer Metalllegierung, wie Stahl, Kupfer oder Messing. Das Düsenmaterial ist vorzugsweise in Abhängigkeit der verwendeten Prozesstemperaturbereiche gewählt. Die Anzahl der Düsen ist variabel und richtet sich insbesondere nach den Anforderungen der Bauteile.

Unter "Heissgas" ist ein temperiertes Gas zu verstehen, das eine Temperatur zwischen Raumtemperatur und 1000°C aufweisen kann.

Das mindestens eine Fixierelement kann seitlich der Auftragseinheit angeordnet sein. Es ist aber auch möglich, dass das mindestens eine Fixierelement an einem Rahmen oder auf der Düsenplatte und vorzugsweise zwischen den Heissgasdüsen angeordnet ist.

Die erste Halterung dient vorzugsweise der Halterung eines vorgeformten Metallbauteils zur Herstellung eines Hybridbauteils. Die zweite Halterung kann zur Aufnahme eines vorgeformten Kunststoffbauteils zur Herstellung des Hybridbauteils dienen. Das zweite Bauteil kann auch aus einem anderen Material bestehen, beispielsweise einem weiteren Metall oder einer weiteren Metalllegierung. Auch textile Materialien oder Kunststoff sind denkbar.

Die Vorrichtung zeichnet sich dadurch aus, dass eine Schweisshilfe, insbesondere eine Folie, auf ein Bauteil komplexer Geometrie beschichtet werden kann. Das Aufbringen der Folie kann gleichmässig über das gesamte Bauteil erfolgen.

Vorteilhafterweise ist die mindestens eine Heissgasdüse vertikal verschiebbar. Die mindestens eine Heissgasdüse kann als Teleskopstange ausgebildet sein. Es ist auch denkbar, dass die mindestens eine Heissgasdüse durch eine Düsenplatte hindurchragend angeordnet ist und durch ein zu fügendes Bauteil aus der Düsenplatte heraus gedrückt wird. Vorzugsweise entspricht die Anordnung der Heissgasdüsen der dreidimensionalen Kontur des Bauteils. Es ist auch möglich, dass die Heissgasdüsen vertikal gegeneinander verschiebbar sind, so dass eine Anpassung an unterschiedliche dreidimensionale Konturen erfolgen kann.

Die Anordnung und Verschiebbarkeit der Heissgasdüsen hat den Vorteil, dass das gesamte Bauteil, auf welchen eine Schweisshilfe angebracht werden soll, gleichmässig mit einem vollflächigen Gasstrom belegt werden kann. Dadurch wird eine einheitliche Schweissfläche bzw. Schweissnaht erzeugt und ein optimaler Materialverbund erreicht. Zudem lässt sich über den Abstand der Düsen zum Bauteil auch die auf das Bauteil effektiv wirkende Temperatur des Heissgases steuern.

Die Schweisshilfe ist vorzugsweise eine Folie aus einem thermoplastischen Material. Die Folie kann eine Schicht oder mehrere Schichten aufweisen. Bevorzugt sind zwei und drei Schichten. Die Schichten können verschiedene Materialzusammensetzungen aufweisen. Vorzugsweise weisen die Schichten zusammen aber mindestens 50 Gew.-% eines thermoplastischen Kunststoffes auf.

Schweisshilfen in Form von Folien erleichtern die Auftragung. Mehrere Schichten haben den Vorteil, dass die jeweils zu einem entsprechenden Bauelement weisende Oberfläche der Schicht derart angepasst werden kann, dass eine optimale Haftung zwischen beispielsweise einer ersten äusseren Schicht und einem Metallelement respektive einer zweiten äusseren Schicht und einem zweiten Bauelement erzielt werden kann. Eine dritte Schicht zwischen der ersten und der zweiten äusseren Schicht kann dann derart gestaltet sein, dass diese eine optimale Haftung zwischen den äusseren Schichten gewährleistet. Auf diese Art kann ein besonders fester Verbund zwischen verschiedenen Bauelementen erzielt werden.

Die Verwendung eines thermoplastischen Materials ermöglicht die Schweissung unterschiedlicher Materialien, beispielsweise Metall und Kunststoff oder artungleiche Kunststoffe. Vorzugsweise weist die thermoplastische Folie nur einen sehr geringen Harz-Gehalt auf, um so ein Zerfliessen der Folie bei Beaufschlagung mit Heissgas zu vermeiden und die Viskosität nicht herabzusetzen. Das thermoplastische Material kann ausgewählt sein aus: Polypropylen, Polyethylen, modifiziertes Polyolefin, Ionomer, Copolyamid, Copolyester, thermoplastisches Polyurethan, StyrolCopolymer und Mischungen davon. Die Aufzählung ist dabei nicht abschliessend zu verstehen. Modifizierte Polyolefine können beispielsweise Ethylenacrylsäure-Copolymer(EAA), Ethylenvinylacetat (EVA), Ethylenmethylacrylat (EMA) und Ethylenbutylacrylat (EBA) sein. Vorzugsweise sind Poylpropylen und Polyethylen mit funktionellen Gruppen wie Säureanhydride oder Epoxide, beispielsweise Maleinsäureanhydrid oder Glycidylmethacrylat, funktionalisiert, entweder als Pfropfpolymere oder Copolymere.

Das mindestens eine Fixierelement kann ein Greifarm, ein Pin, eine Nadel, ein Klebepunkt, eine Vakuumdüse und/oder ein elektrostatisch wirkendes Bauelement sein.

Klebepunkte können in Form von Selbstklebepunkte vorliegen, welche ein punktuelles Anhaften der Folie ermöglichen.
Eine oder mehrere Vakuumdüsen kann/können zwischen den Heissgasdüsen angeordnet sein. Es ist auch denkbar, dass eine Heissgasdüse abwechselnd als Heissgas- und Vakuumdüse geschaltet ist. Die Vakuumdüsen ermöglichen die Fixierung der Folie mittels Unterdruck. Ein Pin kann beispielsweise derart ausgestaltet sein, dass er in ein vorgestanztes Loch der Folie einfahren kann. Es können auch mehrere Pins und vorgestanzte Löcher vorhanden sein. Eine Nadel kann die Folie perforieren. Es können auch mehrere Nadeln die Folie perforieren.
Bei einem elektrostatischen Bauelement sind insbesondere zwei Ausführungen denkbar. Das Fixierelement selbst kann eine elektrische Fixierung über elektrostatische Aufladung vornehmen oder ein Handlings-Gerät, z.B. ein Greifarm, an der Auftragseinheit führt die Folie an einer Aufladungseinheit vorbei und legt diese anschliessend in ein vorgeformtes Bauteil in der ersten Halterung. Das Bauteil kann über die Halterung geerdet sein, somit kann die Ladung der aufgeladenen Folie abfliessen, was zu einer vorübergehenden Haftung führt. Die Aufladeeinheit kann integraler Bestandteil der Vorrichtung sein oder neben der Vorrichtung angeordnet sein. Solche Aufladegeräte können beispielsweise Auflade-Elektroden (Firmen: Simco-Ion^{™}, Eltex, Kersten Elektrostatik, Haug, Dr. Escherisch) sein.
Es ist auch denkbar, dass unterschiedliche Fixierelemente an der Auftragseinheit angeordnet sind, beispielsweise können sowohl Greifarme als auch Vakuumdüsen an der Auftragseinheit angebracht sein oder Pins und Vakuumdüsen.

Die Fixierelemente haben den Vorteil, dass die Folie vor dem Heissgas-Schweissen gehalten und optimal positioniert werden kann. Dies ermöglicht eine präzise und gleichmässige Auftragung der Folie.

Das mindestens eine Fixierelement kann relativ zu der mindestens einen Heissgasdüse vertikal verschiebbar sein. Beispielsweise können die Fixierelemente an ausfahrbaren Teleskopstangen angebracht sein. Die Teleskopstangen können ein integraler Bestandteil der Auftragseinheit sein oder nachträglich an diese montiert worden sein.

Durch die Verschiebbarkeit der Fixierelemente wird das Auftragen der Folie vereinfacht, die unterschiedlichen Abstände zu Bauteil aufgrund der komplexen Geometrie können berücksichtigt werden.

Die vertikale Verschiebung der mindestens einen Heissgasdüse und des mindestens einen Fixierelements sind vorzugsweise elektronisch steuerbar. Die Steuerung kann beispielsweise über eine entsprechende Software und einem Computer und/oder Display erfolgen. Diese können Teil der Vorrichtung sein oder extern mit dieser verbunden sein. Die Signalübertragung kann mittels Kabeln oder kabellos erfolgen.

Eine elektronische Steuerung hat den Vorteil, dass Prozessparameter nachträglich während eines Verfahrens verändert werden können, ohne den Prozess unterbrechen zu müssen.

Die mindestens eine Halterung und die Auftragseinheit können elektronisch steuerbar sein und relativ zueinander bewegbar sein. Die Bewegung der mindestens einen Halterung und der Auftragseinheit kann vertikal oder lateral sein. Es ist auch möglich, dass eine zweite Halterung vorgesehen ist, die elektronisch steuerbar und relativ zu der ersten Halterung und der Auftragseinheit bewegbar ist.

Die elektronische Steuerung und relative Beweglichkeit vereinfachen das Verfahren und ermöglichen eine Anpassung der Verfahrensparameter während des Prozessvorgangs.

Die mindestens eine Halterung kann derart konfiguriert sein, dass das Bauteil beheizbar ist. Beispielsweise kann die Halterung mit Heizwiderständen oder Temperiermedien ausgestattet sein. Das Beheizen kann auch in Form von Konvektion erfolgen. Es ist auch denkbar, dass das Heizen mittels Induktion oder Strahlung, insbesondere IR-Strahler, erfolgt. IR-Strahler können beispielsweise auch unterhalb der ersten Halterung angeordnet sein.

Das Beheizen des Bauteils ermöglicht einen optimierten Energieeintrag in das Bauteil. Es hat zudem den Vorteil, dass geringere Prozesszeiten erforderlich sind, die Beschichtung kann schneller erfolgen. Die Anhaftung der Folie wird zusätzlich verbessert.

Die Halterung kann an das Bauteil anpassbar sein. Die Halterung kann beispielsweise in der Längen- und/oder Höhenausdehnung anpassbar sein. Alternativ kann die Halterung die Form des vorgeformten Bauteils aufweisen.

Auf die Art lassen sich unterschiedliche Bauteile mit derselben Vorrichtung bearbeiten.

Vorteilhafterweise weist die Vorrichtung eine Heissgaserzeugniseinrichtung auf. Die Einrichtung umfasst vorzugsweise eine Gasquelle, beispielsweise eine Gasflasche, und eine Temperiereinheit für das Gas. Das Gas kann Inertgas, beispielsweise Stickstoff, oder auch ein Gasgemisch, beispielsweise Luft sein. Der Einsatz von Heissgas mit Luft ist dann vorteilhaft, wenn nur das Metallbauteil beheizt werden muss. Dies ist besonders kostengünstig. Mittels Heissgas kann die Folie an das vorgeformte Metallbauteil angedrückt werden.

Die Vorrichtung weist vorzugsweise eine Vakuumeinrichtung auf, vorzugsweise eine Vakuumpumpe. Das Vakuum kann aber auch auf andere Art erzeugt sein, z.B. mittels des Venturi-Effekts. Somit lässt sich über die Vakuumdüsen ein Unterdruck erzeugen. Durch den Unterdruck kann die Folie an der Auftragseinheit fixiert werden.

Ein weiterer Aspekt der Erfindung betrifft ein Verfahren zur Herstellung eines Hybridbauteils. Das Verfahren umfasst in einem ersten Schritt das Bereitstellen einer Vorrichtung wie vorhergehend beschrieben. Ein weiterer Schritt ist die Befestigung eines ersten Bauteils in der ersten Halterung der Vorrichtung. Das erste Bauteil ist vorzugsweise ein vorgeformtes Metallbauteil. Optional kann das erste Bauteil vorgeheizt werden.
Das Verfahren umfasst auch den Schritt des Fixierens einer thermoplastischen Folie an der Auftragseinheit mittels des mindestens einen Fixierelements. Das mindestens eine Fixierelement ist wie vorhergehend dargelegt ausgestaltet.
Das Verfahren umfasst weiter das Aufbringen der Folie mittels Heissgas auf einer Oberfläche, bevorzugt einer beheizten Oberfläche, des ersten Bauteils, vorzugsweise des Metallbauteils. Durch das Heissgas wird die Folie an das Bauteil angedrückt, durch die einwirkende Hitze aufgeschmolzen und so auf die Bauteiloberfläche kaschiert.

Ein weiterer Schritt ist die Bereitstellung eines zweiten Bauteils mit einer Oberfläche, vorzugsweise ein vorgeformtes Kunststoffelement. Es ist optional auch möglich eine Oberfläche des zweiten Bauteils aufzuheizen.
Die Bauteile werden an den Oberflächen derart gefügt, dass eine stoffschlüssige Verbindung entsteht.

Alternativ wird das zweite Bauteil an das erste, mittels Heissgas beschichtete Bauteil in einem separaten Fügungsprozess angeformt. Das Anformen kann mittels z.B. Spritzgiessen, Heiss-/Fliesspressen oder Formpressen erfolgen.

Unter Hybridbauteil ist ein Bauteil aus ungleichen Materialien zu verstehen, auch ungleiche Metalle oder ungleiche Kunststoffe können ein Hybridbauteil bilden.

Das Verfahren ermöglicht die Herstellung von Hybridbauteilen mit komplexen Geometrien. Zudem ermöglicht das Verfahren den Einsatz unterschiedlichster Materialien zur Herstellung eines Hybridbauteils.

Die mindestens eine Heissgasdüse und/oder das mindestens eine Fixierelement können relativ zueinander vertikal verschoben werden. Auf die Ausführungen zu den Heissgasdüsen und Fixierelementen wird hiermit verwiesen.

Die Heissgasdüsen und Fixierelemente können so optimal an die dreidimensionale Struktur des Bauteils angepasst werden. Prozessparameter können während des Prozesses optimiert werden.

Das erste Bauteil kann aus einem beschichteten oder unbeschichteten Metall oder einer Metalllegierung sein. Beispiele dafür sind Aluminium; Aluminiumlegierung; Stahl, insbesondere Edelstahl oder verzinkter Stahl; Kupfer oder Kupferlegierungen; Titan oder Titanlegierungen; Magnesium oder Magnesiumlegierungen; Zinn oder Zinnlegierungen; Blei oder Bleilegierungen. Weitere Beispiele sind Messing und Bronze. Bei der Beschichtung kann es sich um Passivierungsschichten, Zinkschichten, KTL-Lacke handeln. Diese Beschichtungen sind dem Fachmann bekannt.

Hybridbauteile mit mindestens einer Metallkomponente finden vielfältige Anwendungsmöglichkeiten aufgrund der günstigen Eigenschaften von Metallen, wie Festigkeit und Temperaturresistenz. Solche Hybridteile können beispielsweise in der Schiff-, Auto- und Raumfahrtindustrie eingesetzt werden.

Das zweite Bauteil ist vorzugsweise ausgewählt aus der Gruppe: Kunststoff, d.h. Thermoplast, Elastomere oder Duroplast; Metall; Metalllegierungen; Textil und faserverstärkte Kunststoffe. Bevorzugt sind technische Textilien jeglicher Art. Die technischen Textilien können linienförmig (Cords), z.B. Seile, sein oder textile Flächengewebe wie Vlies, Gewirke, Gestricke oder Gewebe, z.B. Filtermatten. Alternativ ist es auch denkbar, dass das Kunststoffbauteil mittels z.B. Spritzguss, Heiss-/Fliesspressen oder Formpressen an das Metallbauteil angeformt ist.

Es sind Hybridbauteile aus Metall-Metall, wobei die Metalle unterschiedlich sind; Metall-Kunststoff; Kunststoff-Kunststoff, wobei die Kunststoffe unterschiedlich sind; Metall-Textil oder Kunststoff-Textil denkbar. Es ist auch möglich ein Hybridbauteil herzustellen, das mehr als zwei Materialien umfasst. Beispielsweise kann das erste Bauteil ein Metall sein, das Zweite ein Textil und das dritte Bauteil umfasst einen Thermoplast, welcher mittels Spritzguss angegossen wird. Es ist auch denkbar, dass ein Metallbauteil und ein Kunststoffbauteil kombiniert werden und von einem weiteren Kunststoff umspritzt werden.

Ein weiterer Aspekt der Erfindung betrifft die Verwendung einer Auftragseinheit für eine Vorrichtung zum Heissgas-Schweissen wie vorhergehend beschrieben zum Schweissen von Folien. Insbesondere zum Anbringen der Folie wie vorhergehend dargelegt.

Die Erfindung wird anhand von Figuren, welche lediglich Ausführungsbeispiele darstellen, näher erläutert. Es zeigen:
- Figur 1:: Einer erfindungsgemässe Vorrichtung in einer Schnittansicht,
- Figur 2:: die erfindungsgemässe Vorrichtung aus Figur 1 in Betrieb,
- Figur 3:: die erfindungsgemässe Vorrichtung aus Figur 1 nach Auftragen einer thermoplastischen Folie,
- Figur 4:: eine weitere erfindungsgemässe Vorrichtung in der Schnittansicht,
- Figur 5:: eine weitere erfindungsgemässe Vorrichtung in der Schnittansicht,
- Figur 6:: ein Hybridbauteil in einer Schnittansicht,
- Figur 7:: erfindungsgemässe Anordnungen der Heissgasdüsen auf einer Auftragseinheit in einer Draufsicht,
- Figur 8:: eine weitere erfindungsgemässe Vorrichtung in der Schnittansicht,
- Figur 9:: die erfindungsgemässe Vorrichtung aus Figur 8 in Betrieb.

Gleiche Bezugszeichen in den Figuren kennzeichnen gleiche Bauteile.

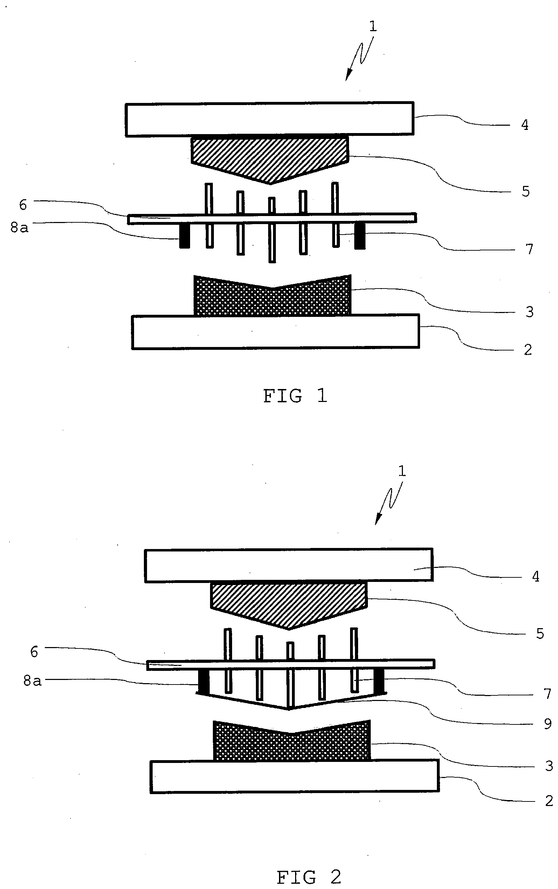

Figur 1 zeigt eine erfindungsgemässe Vorrichtung 1 zum Heissgas-Schweissen. Die Vorrichtung 1 weist eine erste Halterung 2 auf, in die ein erstes Bauteil 3 aus Metall eingesetzt ist. Parallel zu der ersten Halterung 2 ist eine zweite Halterung 4 angeordnet. An die zweite Halterung 4 ist ein zweites Bauteil 5 aus Kunststoff angebracht. Eine Auftragseinheit 6 ist oberhalb der ersten Halterung 2 und zwischen der ersten Halterung 2 und der zweiten Halterung 4 angeordnet. Die Auftragseinheit 6 ist mit Heissgas-Düsen 7 ausgestattet. Die Heissgasdüsen 7 sind entsprechend dem Profil der Bauteile 3 und 5 angeordnet. Die Auftragseinheit 6 weist zudem Vakuumdüsen 8a auf zum Fixieren einer thermoplastischen Folie (nicht gezeigt).

Figur 2 zeigt die erfindungsgemässe Vorrichtung 1 aus Figur 1 kurz vor dem Auftragen einer thermoplastischen Folie 9. Die thermoplastische Folie 9 ist mittels der Vakuumdüsen 8a an der Auftragseinheit fixiert. Die Heisgassdüsen 7 sind entsprechend dem Profil der Bauteile 3 und 5 angeordnet, so dass die Heissgasdüsen 7 überall den gleichen Abstand zu den Bauteilen 3 und 5 aufweisen.

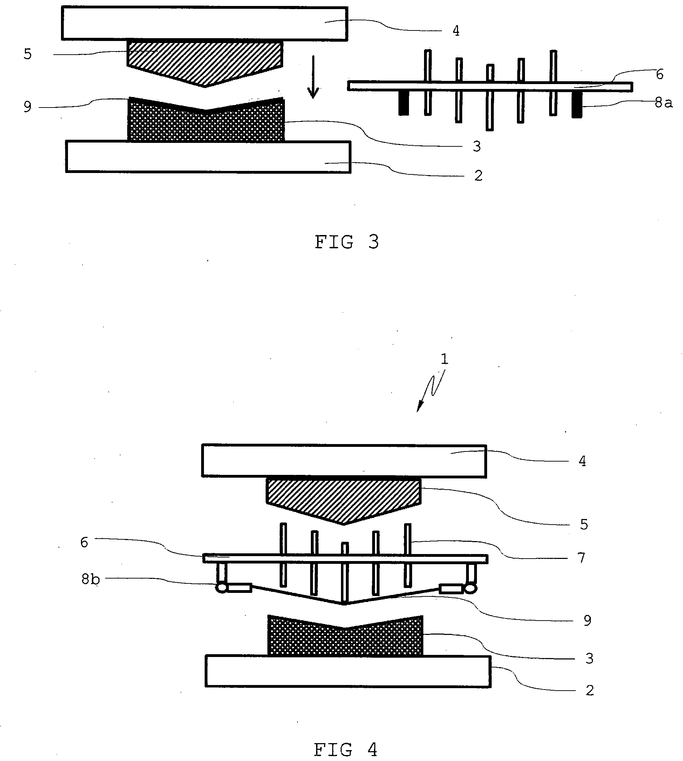

Figur 3 zeigt die Vorrichtung 1 aus Figur 1 und 2 nach dem Auftragen der thermoplastischen Folie 9. Die thermoplastische Folie 9 wurde auf eine Oberfläche des ersten Bauteils 3 aufgebracht. Im Anschluss wurde die Auftragseinheit 6 lateral ausgefahren, so dass die zweite Halterung 4 das zweite Bauteil 5 an das erste Bauteil 3 andrücken kann. Die zweite Halterung 4 wird dazu auf die erste Halterung 2 zubewegt (Pfeil).

Figur 4 zeigt eine weitere Ausführungsform einer erfindungsgemässen Vorrichtung 1. In dieser Vorrichtung 1 sind die Vakuumdüsen durch Greifarme 8b ersetzt. Die Greifarme 8b greifen und halten die thermoplastische Folie 9. Die Heissgasdüsen 7 sind wieder entsprechend dem Profil der Bauteile 3 und 5 angeordnet und haben zu diesen überall denselben Abstand.

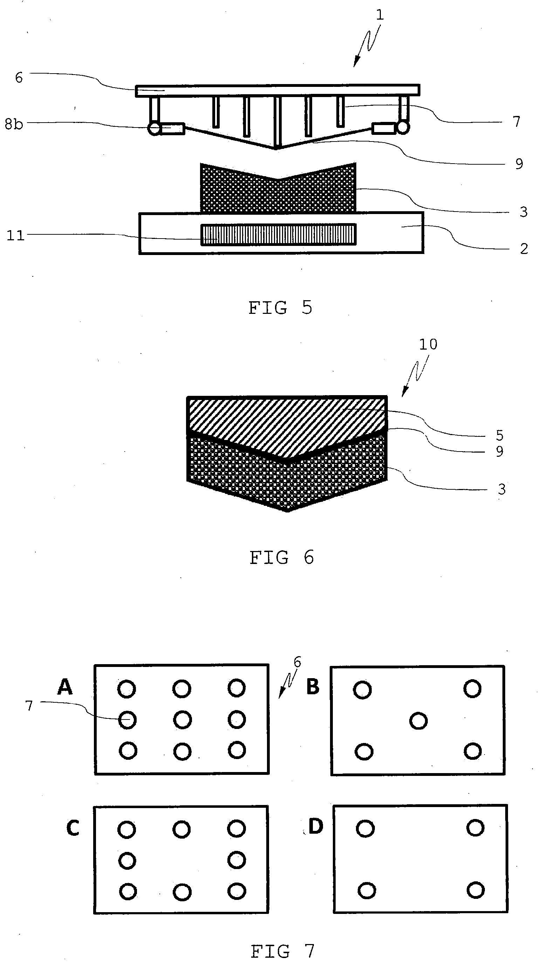

Figur 5 zeigt eine weitere erfindungsgemässe Vorrichtung 1. In dieser Vorrichtung 1 weist die erste Halterung 2 ein Heizelement 11 auf, die das erste Bauteil 3 vor der Applikation der thermoplastischen Folie 9 erhitzt. Die Auftragseinheit 6 weist in dieser Ausführungsform wieder Greifarme 8b zum Halten und Positionieren der thermoplastischen Folie 9 auf. Eine zweite Halterung ist in dieser Vorrichtung nicht vorgehsehen. In einem weiteren Verfahrensschritt kann das zweite Bauteil mittels Spritzguss an das erste Bauteil 3 angebracht werden. Das Anbringen eines zweiten Bauteils kann auch analog der in Bezug auf Figur 1 bis 4 beschriebenen Ausführungen erfolgen.

Figur 6 zeigt ein Hybridbauteil 10 in einer Schnittansicht, dass mit einer erfindungsgemässen Vorrichtung hergestellt wurde. Das Hybridbauteil 10 besteht aus einem ersten Bauteil 3. Das erste Bauteil 3 ist aus Metall. An das erste Bauteil 3 ist ein zweites Bauteil 5 aus Kunststoff angebracht. Zwischen dem ersten Bauteil 3 und dem zweiten Bauteil 5 ist die thermoplastische Folie 9 als Zwischenschicht angeordnet.

Figur 7 zeigt mögliche Anordnungen von Heissgasdüsen 7 auf einer Auftragseinheit 6 in einer Draufsicht. In Variante A sind die Heissgasdüsen 7 über die gesamte Platte der Auftragseinheit 6 angeordnet. Eine solche Anordnung eignet sich besonders bei grossflächigen Bauteilen. In Variante B sind die Heissgasdüsen 7 an den Ecken und mittig der Auftragseinheit 6 angebracht. In Variante C sind die Heissgasdüsen 7 umlaufend auf der Auftragseinheit 6 angebracht. Eine solche Anordnung ist beispielsweise bei Bauteilen günstig, die mittig eine Aussparung aufweisen. In Variante D sind nur an den Eckpunkten Heissgasdüsen 7 aufgebracht. Variante B und D eignen sich beispielsweise für Bauteile, die nur partiell mit einem weiteren Bauteil zu einem Hybridbauteil verbunden werden sollen.

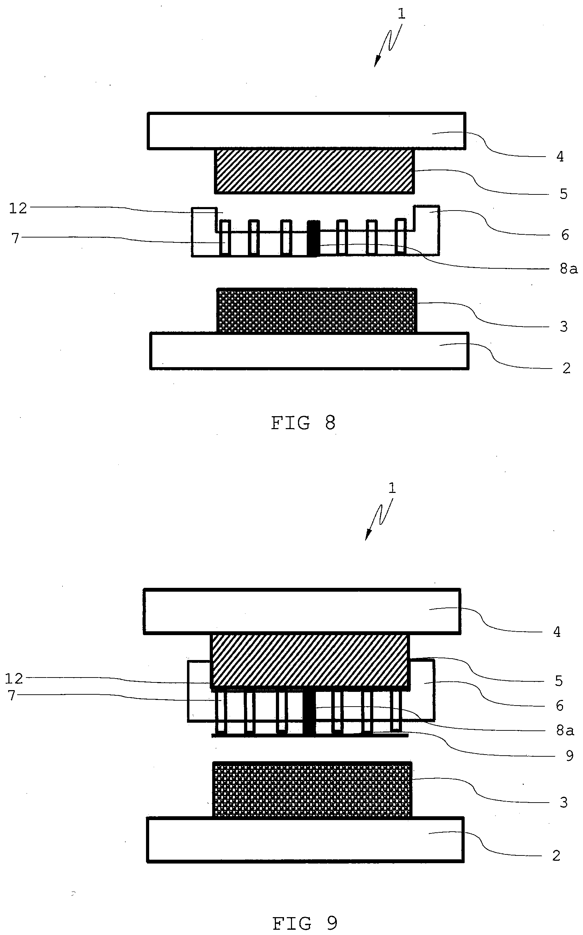

Figur 8 zeigt eine erfindungsgemässe Vorrichtung 1 mit einer weiteren Variante einer Auftragseinheit 6. Die Auftragseinheit 6 ist mit Heissgasdüsen 7 und einer Vakuumdüse 8a versehen, die durch die Auftragseinheit 6 hindurchragend angeordnet sind und vor Betrieb in eine Aussparung 12 der Auftragseinheit 6 ragen. Die Aussparung 12 ist an die Kontur eines zweiten Bauteils 5 angepasst.

In Figur 9 ist gezeigt, wie die Vorrichtung 1 aus Figur 8 in Gebrauch funktioniert. Die zweite Halterung 4 mit dem zweiten Bauteil 5 wird in Richtung der Auftragseinheit 6 bewegt. Dabei wird das zweite Bauteil 5 von der Aussparung 12 der Auftragseinheit 6 aufgenommen und die Heissgasdüsen 7 und die Vakuumdüse 8a werden aus der Auftragseinheit 6 nach unten in Richtung der ersten Halterung 2 mit dem ersten Bauteil 3 herausgedrückt. Die Vakuumdüse kann nun eine thermoplastische Folie 9 aufnehmen, die mittels der Heissgasdüsen 7 auf das erste Bauteil 3 aufgebracht werden kann.

## Patentansprüche

1. Vorrichtung (1) zum Heissgas-Schweissen umfassend
- mindestens eine erste Halterung (2) zum Halten eines ersten Bauteils (3);
- optional: eine zweite Halterung (4) zum Halten eines zweiten Bauteils (5), wobei die zweite Halterung (4) parallel zur ersten (2) anordenbar ist;
- eine Auftragseinheit (6), wobei die Auftragseinheit (6) über der ersten Halterung (2) und optional zwischen der ersten (2) und der zweiten Halterung (4) anordenbar ist und mindestens eine Heissgasdüse (7) umfasst,
**dadurch gekennzeichnet, dass** mindestens ein Fixierelement (8a, 8b) an der Auftragseinheit (6) angeordnet ist.

2. Vorrichtung (1) gemäss Anspruch 1, wobei die mindestens eine Heissgasdüse (7) vertikal verschiebbar ist.

3. Vorrichtung (1) nach Anspruch 1 bis 2, wobei das mindestens eine Fixierelement (8a, 8b) ein Greifarm, ein Pin, eine Nadel, ein Klebepunkt, eine Vakuumdüse und/oder ein elektrostatisch wirkendes Bauelement ist.

4. Vorrichtung (1) gemäss einem der Ansprüche 1 bis 3, wobei das mindestens eine Fixierelement (8a, 8b) relativ zu der mindestens einen Heissgasdüse (7) vertikal verschiebbar ist.

5. Vorrichtung (1) nach einem der Ansprüche 2 bis 4, wobei die vertikale Verschiebung der mindestens einen Heissgasdüse (7) und des mindestens einen Fixierelements (8a, 8b) elektronisch steuerbar ist.

6. Vorrichtung (1) gemäss einem der Ansprüche 1 bis 5, wobei die mindestens eine Halterung (2) und die Auftragseinheit (6) elektronisch steuerbar sind und relativ zueinander bewegbar sind.

7. Vorrichtung (1) nach einem der Ansprüche 1 bis 6, wobei die mindestens eine Halterung (2, 4) derart konfiguriert ist, dass das Bauteil (3, 5) beheizbar (11) ist.

8. Vorrichtung (1) nach einem der Ansprüche 1 bis 7, wobei die Halterung (2, 4) dem Bauteil (3, 5) anpassbar ist.

9. Vorrichtung (1) nach einem der Ansprüche 1 bis 8, wobei die Vorrichtung (1) eine Heissgaserzeugniseinrichtung aufweist.

10. Vorrichtung (1) nach einem der Ansprüche 1 bis 9, wobei die Vorrichtung (1) eine Vakuumeinrichtung aufweist, vorzugsweise eine Vakuumpumpe.

11. Verfahren zur Herstellung eines Hybridbauteils (10) umfassend die Schritte,
- Bereitstellen einer Vorrichtung (1) gemäss einem der Ansprüche 1 bis 10,
- Befestigung eines ersten Bauteils (3) mit einer Oberfläche in der ersten Halterung (2) der Vorrichtung (1),
- Optional: Aufheizen der Oberfläche des ersten Bauteils,
- Fixieren einer thermoplastischen Folie (9) an der Auftragseinheit (6) mittels des mindestens einem Fixierelements (8a, 8b),
- Aufbringen der Folie (9) mittels Heissgas auf die Oberfläche des ersten Bauteils (3),
- Bereitstellen eines zweiten Bauteils (5) mit einer Oberfläche,
- Optional: Aufheizen einer Oberfläche des zweiten Bauteils (5),
- Fügen der Bauteile (3, 5) an den Oberflächen derart, dass eine stoffschlüssige Verbindung entsteht,
- Oder alternativ: Anformen eines zweiten Bauteils (5) an das erste Bauteil (3).

12. Verfahren gemäss Anspruch 11, wobei die mindestens eine Heissgasdüse (7) und/oder das mindestens eine Fixierelement (8a, 8b) relativ zueinander vertikal verschoben werden.

13. Verfahren gemäss Anspruch 11 oder 12, wobei das erste Bauteil (3) aus einem beschichteten oder unbeschichteten Metall oder einer Metalllegierung, vorzugsweise Aluminium oder Stahl, ist.

14. Verfahren gemäss einem der Ansprüche 11 bis 13, wobei das zweite Bauteil (5) ausgewählt ist aus der Gruppe: Kunststoff, vorzugsweise Thermoplast, Duroplast oder faserverstärkter Kunststoff; Metall; Metalllegierungen; Textil.

15. Verwendung einer Auftragseinheit (6) für eine Vorrichtung (1) zum Heissgas-Schweissen gemäss einem der Ansprüche 1 bis 10 zum Schweissen von Folien (9).
